# EUROPEAN PATENT SPECIFICATION

(11) **EP 2 247 124 B1**
(45) Date of publication and mention of the grant of the patent: **03.12.2014**
(21) Application number: 09722138.6
(22) Date of filing: 17.03.2009
(51) Int. Cl.: H04L 12/58, H04W 4/12, H04W 8/18

(54) **Method, system and related device for implementing multimedia messaging service**
Verfahren, System und dazugehöriges Gerät zum Einsetzen eines multimedialen Berichtdienstes
Procédé, système et dispositif associé pour mettre en oeuvre un service de messagerie multimédia

(30) Priority: 18.03.2008 CN 200810087315
(43) Date of publication of application: 03.11.2010
(73) Proprietor: Huawei Technologies Co., Ltd., Longgang District, Shenzhen Guangdong 518129 (CN)
(72) Inventor: SHI, Yibing, Guangdong 518129 (CN)
(74) Representative: Körber, Martin Hans
(86) International application number: PCT/CN2009/070836
(87) International publication number: WO 2009/115033

(56) References cited:
- EP-A2- 1 424 860
- EP-A2- 1 555 835
- WO-A1-2007/134821
- CN-A- 1 889 718
- CN-A- 101 068 375
- CN-A- 101 252 704
- DE-A1-102004 041 912
- "3GPP TS 23.140 V6.14.0 (2006-09); 3rd Generation Partnership Project; Technical Specification Group Core Network and Terminals; multimedia Messaging Service (MMS); Functional description; Stage 2 (Release 6)", 3GPP-STANDARDS, 2500 WILSON BOULEVARD, SUITE 300, ARLINGTON, VIRGINIA 22201 USA, September 2006 (2006-09), XP040278085,
- T-MOBILE: "Support of Messaging Service Control Function (MSCF)", 3GPP DRAFT; T2-040369, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20040918, 18 September 2004 (2004-09-18), XP050299907, [retrieved on 2004-09-18]

## Description

### Field of the Invention

The present invention relates to the field of communications technologies, and particularly, to a method, system and device for implementing multimedia messaging services.

### Background of the Invention

The Multimedia Messaging Service (MMS) is a further development of the Short Message Service (SMS) and the Enhanced Message Service (EMS), and it provides a complete end-to-end solution for the personal multimedia mobile communications services.

Viewed from the communications content, the multimedia message includes image, audio, video and data, etc.; and viewed from the function, the MMS covers multimedia message communication of terminal-to-terminal, terminal-to-application and application-to-terminal. The MMS realizes information transmission between terminals, information transmission between terminal and application, and content diversity including combinations of picture, speech, image, data and text. The MMS is an open media access platform, from which richer content service applications can be derived under the interaction between the mobile user and the network content provider.

In practical applications, the operator stores and forwards multimedia messages with a Multimedia Messaging Service Center (MMSC), and usually also arranges some value-added services on the MMSC. For example, the operator can provide a signature service to the user, i.e. when the MMSC receives a message submitted by the user, it automatically adds a signature preset by the user at the end of the message content and delivers it to the recipient; the operator may also provide a calling receipt service to the user, i.e. after the message submitted by the user is delivered, the MMSC notifies, in a form such as short message, the user of the result of message sending.

During the study and practice of the prior art, the inventor finds that the prior art has the following problems:

The MMSC per se is a telecom network device requiring high reliability, but directly implementing the value-added services in the MMSC will, on one hand, increase the complexity of the MMSC, and as a result, the development of MMSC is more difficult and the marketing speed of the value-added services is influenced; and on the other hand, the performance of the MMSC is degraded, and thus the Total Cost of Ownership (TCO) of the operator is increased.

Document D1 (3GPP TS 23.140 V 6.14.0 (2006-09); XP040278085) discloses that the MMS relay/server may support interworking with a MSCF, which allows the operator to handle advanced addressing with the MMSE, according to the trigger configuration data in the MMSE. In addition, after receiving an MM1 submitted message and querying the sender's user profile entry for a profile specific trigger, the MMS Relay/Server shall suspend message processing and send the MM 10 request to the MSCF.

### Summary of the Invention

The technical problem to be solved by the embodiments of the present invention is to provide a method, system and related device for implementing multimedia messaging service (MMS), so as to eliminate the burden on the MMSC brought by direct implementation of value-added services.

In order to solve the above technical problem, the embodiments of the present invention are implemented through the following technical solutions:
The embodiments of the present invention provide a method for implementing MMS, including:
   receiving, by a Multimedia Messaging Service Center, MMSC, a message subscription request carrying message subscription information from a Messaging Service Control Function, MSCF, wherein the message subscription information comprises a user identifier, ID, a service trigger point, a message body indicator and a wait response indicator; wherein, the message body indicator and the wait response indicator indicate the MMSC that the MMSC shall carry a message body when initiating a service processing request and shall then wait for a response from the MSCF;
   storing, by the MMSC, the message subscription information comprising the user ID and the service trigger point, the message body indicator and the wait response indicator, carried in the message subscription request;
   receiving, by the MMSC, a message submission request;
   searching for, by the MMSC, from stored message subscription information in the MMSC and according to a user ID carried in the message submission request, a service trigger point that the MSCF subscribes to for a user; and
   sending, by the MMSC, the service processing request to the MSCF when the service trigger point is reached, and the service processing request includes the user ID and the message body, so that the MSCF searches for, from the stored message subscription information in the MSCF and according to the user ID carried in the message processing request, a service that the user subscribes to, and performs corresponding service processing; wherein, the service that the user subscribes to is a signature service or a sponsor service;
   receiving, by the MMSC, a modified message body returned by the MSCF, and sending the modified message body to a recipient.

The embodiments of the present invention further provide a method for implementing multimedia messaging service, MMS, including:
receiving, by a Messaging Service Control Function, MSCF, a service subscription request submitted by a user agent, UA; wherein the service subscription request submitted by the UA is a signature service subscription request or a sponsor service subscription request and carries service subscription information;
storing, by the MSCF, the service subscription information comprising a user ID and a service type ID carried in the service subscription request;
sending, by the MSCF, a message subscription request carrying message subscription information to a Multimedia Messaging Service Center, MMSC, wherein the message subscription information comprises the user ID, a service trigger point, a message body indicator and a wait response indicator; wherein the service trigger point and the user ID enable the MMSC to send a service processing request at the service trigger point after receiving a message submission request with the user ID, and the message body indicator and the wait response indicator indicate the MMSC that the MMSC shall carry a message body of the message submission request when initiating a service processing request and shall then wait for a response from the MSCF;
receiving, by the MSCF, the service processing request including the user ID and a message body initiated by the MMSC; and
searching for, by the MSCF, from stored service subscription information and according to the user ID, a service that the user subscribes to, and performing corresponding service processing by retrieving, by the MSCF, a message body from the service processing request, adding advertising information or a signature preset by the user to the message body, and returning the message body added with the advertising information or the signature to the MMSC through a service processing response
wherein, the service that the user subscribes to is a signature service or a sponsor service.

The embodiments of the present invention further provide a Messaging Service Control Function , MSCF, including:
a service subscription request receiving unit, configured to receive a service subscription request carrying service subscription information, wherein the service subscription request submitted by a user agent, UA, is a signature service subscription request or a sponsor service subscription request and carries service subscription information;
a service subscription information storage unit (502), configured to store the service subscription information comprising at least a user ID and a service type ID;
a message subscription request sending unit, configured to send a message subscription request carrying message subscription information to a Multimedia Messaging Service Center, MMSC, wherein the message subscription information comprises the user identification, ID, a service trigger point, a message body indicator and a wait response indicator; wherein the service trigger point and the user ID enable the MMSC to send a service processing request at the service trigger point after receiving a message submission request with the user ID, and the message body indicator and the wait response indicator indicate the MMSC that the MMSC shall carry a message body of the message submission request when initiating a service processing request and shall then wait for a response from the MSCF;
a service processing request receiving unit, configured to receive a service processing request;
a service searching unit, configured to search for, from a service subscription information storage unit and according to the user ID of the user carried in the service processing request, a service that the user subscribes to; and
a service processing unit, configured to perform corresponding service processing according to the service searched out by the service searching unit by retrieving, a message body from the service processing request, adding advertising information or a signature preset by the user to the message body, and returning the message body added with the advertising information or the signature to the MMSC through a service processing response
wherein the service that the user subscribes to is a signature service or a sponsor service.

The embodiments of the present invention further provide a Multimedia Messaging Service Center, MMSC, including:
a message subscription request receiving unit, configured to receive a message subscription request carrying message subscription information from a Messaging Service Control Function, MSCF, wherein the message subscription information comprises a user identifier, ID, and a service trigger point, a message body indicator and a wait response indicator; wherein, the message body indicator and the wait response indicator indicate the MMSC that the MMSC shall carry a message body when initiating a service processing request and shall then wait for a response from the MSCF;
a message subscription information storage unit, configured to store message subscription information comprising the user ID and the service trigger point, the message body indicator and the wait response indicator carried in the message subscription request;
a message submission request receiving unit configured to receive a message submission request submitted by a user agent (UA);
a service trigger point searching unit, configured to search for, from stored message subscription information in the MMSC and according to a user ID of the user carried in the message submission request, a service trigger point that the MSCF subscribes to for a user, wherein, the service that the user subscribes to is a signature service or a sponsor service; and
a service processing request sending unit, configured to send a service processing request to the MSCF when the service trigger point is reached; and wherein the service processing request comprises the user ID and the message body, to enable the MSCF to search for, from the stored message subscription information in the MSCF and according to the user ID carried in the message processing request, a service that the user subscribes to, and to perform corresponding service processing; wherein, the service that the user subscribes to is a signature service or a sponsor service, and wherein the MMSC is adapted to receive a modified message body returned by the MSCF and to send the modified message body to a recipient.

The embodiments of the present invention further provide a system for implementing MMS, including: an MMSC and an MSCF according to the invention.

The above technical solution has the advantageous effect as follows:
The method for implementing MMS provided by the embodiment of the present invention is described above. As can be seen from the above processes, the embodiments of the present invention implement processing of MMS through message interaction between the MMSC and the MSCF, and eliminate burden on the MMSC brought by directly performing service processing in the MMSC.

### Brief Description of the Drawings

Fig. 1 is a flowchart of a method for implementing MMS according to an embodiment of the present invention;
Fig. 2 is a flowchart of a method for implementing signature service according to an embodiment of the present invention;
Fig. 3 is a flowchart of a method for implementing calling receipt service according to an example useful for understanding the present invention;
Fig. 4 is a flowchart of a method for implementing sponsor service according to an embodiment of the present invention;
Fig. 5 is a construction diagram of an MSCF according to an embodiment of the present invention; and
Fig. 6 is a construction diagram of a system for implementing MMS according to an embodiment of the present invention.

### Detailed Description of the Embodiments

In order to make the object, technical solutions and advantages of the embodiments of the present invention clearer, the embodiments of the present invention are described in detail with reference to the drawings.

The 3GPP Technical Specification 24.140 defines the MM10 interface, introduces the concept of Messaging Service Control Function (MSCF), and explicates the interaction process between the MMSC and the MSCF.

The embodiments of the present invention extend the current MM10 interface. Table 1 shows messages included in the extended MM10 interface provided in the embodiments of the present invention, where the *italics* are newly extended messages:

**Table 1**

| **Message** | **Type** | **Direction** |
|---|---|---|
| *Message Subscription Request (MM10_Subscribe.REQ)* | *Request* | *MSCF -> MMSC* |
| *Message Subscription Response (MM10_Subscribe. RES)* | *Response* | *MMSC* -> *MSCF* |
| Service Processing Request (MM10_Interrogation.REQ) | Request | MMSC -> MSCF |
| Service Processing Response (MM10_Interrogation.RES) | Response | MSCF -> MMSC |

The message MM10_Subscribe.REQ is initiated by the MSCF to subscribe to message from the MMSC. The message MM10_Interrogation.REQ/.RES is a message acquired by extending several fields in the message MM10_Interogation.REQ/.RES specified in the current 3GPP standard protocol; the message MM10_Interrogation.REQ is initiated by the MMSC to trigger a message submitted by the user to the MSCF for corresponding service processing:
See Tables 2-5 for the detailed definitions of various messages in Table 1, where the *italics* are newly extended fields:

**Table 2 Definition of Subscription Request MM10_Subscribe.REQ**

| **Information element** | **Presence** | **Description** | |
|---|---|---|---|
| Message Type | Mandatory | Message type, and the value thereof is "MM10_Subscribe.REQ" | |
| Transaction ID | Mandatory | Transaction ID, for identifying corresponding relationship with MM10_Subscribe.RES | |
| Subscriber | Mandatory | The number of a Subscriber who has subscribed to the service | |
| Trigger Point | Mandatory | Trigger point for the MMSC to forward message to the MSCF. | |
| | | 4 trigger points are set for user of sender: | |
| | | • | sender service trigger point 1 (TPA1): The MMSC receives a submitted message while does not send a response, code 0xF0 |
| | | • | sender service trigger point 2 (TPA2): The MMSC receives a submitted message and has sent a response, code 0xF1 |
| | | • | sender service trigger point 3 (TPA3): The MMSC has started to send a notification message to a recipient, code 0xF2 |
| | | • | sender service trigger point 4 (TPA4): The MMSC has processed the message submitted by the user, code 0xF3 |
| | | | |
| | | 3 trigger points are set for recipient: | |
| | | • | recipient service trigger point 1 (TPB1): Before the MMSC delivers a push notification to the recipient, code 0xF4 |
| | | • | recipient service trigger point 2 (TPB2): The MMSC |
| | | | successfully delivers a push notification to the recipient, code 0xF5 |
| | | • | recipient service trigger point 3 (TPB3): The MMSC has completed the message delivery flow, code 0xF6 |
| Need Body | Optional | Whether a message body shall be carried in the message forwarded by the MMSC to the MSCF | |
| Wait for Response | Optional | Whether a response shall be waited for after the MMSC forwards the message to the MSCF | |

**Table 3 Definition of Subscription Response MM10_Subscribe.RES**

| **Information element** | **Presence** | **Description** |
|---|---|---|
| Message Type | Mandatory | Message type, and the value thereof is "MM10_Subscribe.RES" |
| Transaction ID | Mandatory | Transaction ID, for identifying corresponding relationship with MM10_Subscribe.REQ |
| Status code | Mandatory | Indicating whether the subscription succeeds |

**Table 4 Definition of Service Processing Request MM10_Interrogation.REQ**

| **Information element** | **Presence** | **Description** |
|---|---|---|
| Message Type | Mandatory | Message type, and the value thereof is "MM10_Interrogation.REQ" |
| *Transaction ID* | *Mandatory* | *Transaction ID, for identifying corresponding relationship with MM10_Interrogation.RES* |
| Trigger Event | Mandatory | The trigger point, which initiated the sending of the MM10_Interrogation.REQ |
| *Message ID* | *Mandatory* | *multimedia message (MM) ID* |
| *Originator Message ID* | *Optional* | *Original ID of the message. If the message is forwarded from other MMSC, the ID of the message in the original MMSC shall be placed in this field and carried to the MSCF* |
| Recipient(s) address | Mandatory | Address of message recipient: there may be multiple addresses |
| Sender address | Mandatory | Address of message sender |
| *Sender Presentation* | *Optional* | *Sender ID presented to the recipient* |
| *Content type* | *Mandatory* | *Content type of the message content* |
| *Message class* | *Optional* | *Message class (e.g., personal service, advertising service and information service)* |
| *Date and time* | *Mandatory* | *Date and time when the UA lately processes (i.e., submits or forwards) the MM* |
| *Time of Expiry* | *Optional* | *Time of Expiry of the message* |
| *Earliest delivery time* | *Optional* | *Earliest delivery time* |
| Delivery report | Optional | A request for delivery report |
| *Originator R*/*S delivery report* | *Optional* | *MMSC delivery report request. With respect to message forwarded from other MMSC, the field indicates whether the sender MMSC requires an MM delivery report.* |
| *Priority* | *Optional* | *Message priority* |
| Sender visibility | Optional | requiring displaying or hiding the ID of sender when the message is sent to the recipient |
| Read reply | Optional | A request for read reply report |
| *Subject* | *Optional* | *Message subject* |
| *Forward_counter* | *Optional* | *Counter for indicating the times that the* |
| | | *message is forwarded* |
| *Previously-sent-by* | *Optional* | *Under forwarding condition, the information device includes addresses of one or more MMS UA having processed (i.e., forwarded or submitted) the message, these UAs are previous than MMS UA having address included in "sender" address information device. The orders of the provided addresses shall be marked out. The address of originator MMS UA shall be marked out.* |
| *Previously-sent-date-and-time* | *Optional* | *Date and time when the MMS UA processes (forwards or submits) MM previously* |
| *Applic-ID* | *Optional* | *Target application ID* |
| *Reply-Applic-ID* | *Optional* | *MM replay path ID* |
| *Aux-Applic-Info* | *Optional* | *Auxiliary application address information* |
| *Content Class* | *Optional* | *Class of media included in the MM content* |
| *DRM Content* | *Optional* | *Indicating that the MM content includes digital watermark protection information* |
| *Adaptations* | *Optional* | *Indicating that whether a content adaptation of the MM content can be carried out (defaulted True)* |
| *Originator-System-A ddress* | *Optional* | *Sender MMSC address, for a message forwarded from other MMSC, this field must be filled* |
| *Send Status* | *Optional* | *Message send status, which is only valid at TPA*4 *and TPB3* |
| *Content* | *Optional* | *MM content* |

**Table 5 Definition of Service Processing Response MM10_Interrogation.RES**

| Information Device | Existence status | Description |
|---|---|---|
| Message Type | Mandatory | Message type, and the value thereof is "MM10_Interrogation.RES" |
| *Transaction ID* | *Mandatory* | *Transaction ID, for identifying corresponding relationship with MM10_Interrogation.REQ* |
| *Process Status* | *Mandatory* | *Process Status, including: accepted, refused, message modified, finished normally, finished abnormally* |
| *Message ID* | *Mandatory* | *MM ID* |
| Recipient(s) address | Mandatory | Address of message recipient: there may be multiple addresses |
| Sender address | Mandatory | Address of message sender |
| *Content type* | *Mandatory* | *Content type of the message content* |
| *Message class* | *Optional* | *Message class (e.g., personal service, advertising service and information service).* |
| *Time of Expiry* | *Optional* | *Time of Expiry of the message* |
| *Earliest delivery time* | *Optional* | *Earliest delivery time* |
| *Delivery report* | *Optional* | *A request for delivery report* |
| *Priority* | *Optional* | *Message priority* |
| *Sender visibility* | *Optional* | *requiring displaying or hiding the ID of sender when the message is sent to the recipient* |
| Read reply | Optional | A request for read reply report |
| *Subject* | *Optional* | *Message subject* |
| *Forward_counter* | *Optional* | *Counter for indicating the times that the message* is |
| | | *forwarded* |
| *Content Class* | *Optional* | *Class of media included in the MM content* |
| *Content* | *Optional* | *MM content* |

The MM10 interface provided in the embodiments of the present invention are described in detail above.

The method for implementing MMS provided in the embodiments of the present invention is described as follows with reference to the drawings.

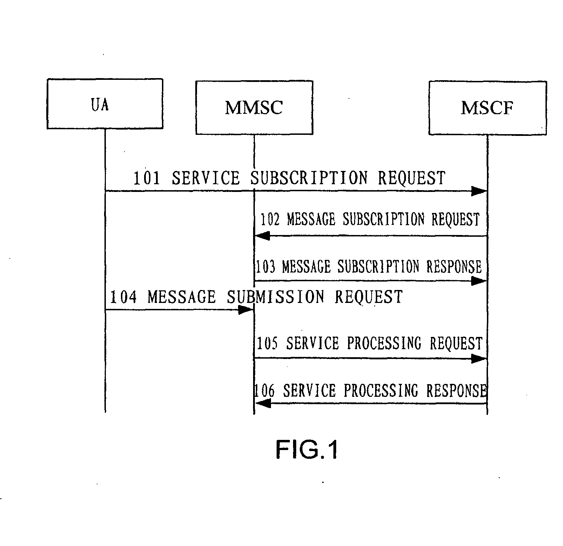

Referring to Fig. 1, a method for implementing MMS according to an embodiment of the present invention is illustrated, the method including:
Step 101: A user agent submits a service subscription request carrying service subscription information to an MSCF;

The service subscription information may be used to indicate, to the MSCF, the identity of a user who subscribes to the service and the type of a subscribed service, and thus the service subscription information may include: a user ID and a service type ID.

In practical implementation, the user ID may be a mobile phone number of the user who subscribes to the service, and since there are various types of MMS including such as Signature Service, Calling Receipt Service and Sponsor Service, the service type ID is used to identify the service to be subscribed to by the service subscription request. For example, it can be predefined that: the service type ID being 00 indicates that the subscription request is a signature service subscription request; the service type ID being 01 indicates that the subscription request is a calling receipt service subscription request; and the service type ID being 11 indicates that the subscription request is a sponsor service subscription request.

When the subscription request is a signature service subscription request, the service subscription information further carries a signature set by the user

Step 102: The MSCF stores the service subscription information, and sends, to the MMSC, a message subscription request (e.g. MM10_Subscribe.REQ) carrying message subscription information;

The message subscription information includes: the user ID and a service trigger point, for indicating the MMSC that the MMSC shall send a service processing request to the MSCF after receiving the message submitted by the user corresponding to the user ID, and indicating the trigger point when the MMSC shall send the service processing request to the MSCF.

Step 103: The MMSC stores the message subscription information, and returns a message subscription response (e.g. MM 10_Subscribe.REQ) to the MSCF.

The process of implementing the subscription of the MMS by the user is described above, and the process of implementing the MMS that the user subscribes to is described as follows, including:
Step 104: A sender UA (Originator UA) submits a message submission request (e.g. MM1_Submit.REQ) to the MMSC;
Step 105: The MMSC searches for, from stored message subscription information and according to the user ID carried in the message submission request, a service trigger point that the MSCF subscribes to for the user; and the MMSC sends a service processing request (e.g. MM10_Interrogation.REQ) to the MSCF when the service trigger point is reached;
Step 106: The MSCF searches for, from stored service subscription information and according to the user ID carried in the service processing request, a service that the user subscribes to, performs corresponding service processing, and returns a service processing response (e.g. MM10_Interrogation.RES) to the MMSC.

The method for implementing MMS provided by the embodiment of the present invention is described above. As can be seen from the above processes, the embodiments of the present invention implement processing of MMS through message interaction between the MMSC and the MSCF, and eliminate burden on the MMSC brought by directly performing service processing in the MMSC. In addition, the MMSC only sends the message that the MSCF subscribes to, to the MSCF for corresponding service processing, which avoids too large pressure on the MSCF due to the MMSC triggering each message sent by the user to the MSCF.

The method provided by the embodiment of the present invention is described in detail as follows in conjunction with the previous three different MMS.

### I. Signature Service

The signature service means that with respect to each message (multimedia message or text message) submitted by a user subscribing to the signature service, the system automatically adds a signature preset by the sender at the end of the message content (e.g. message body) and delivers the message added with the signature to the recipient.

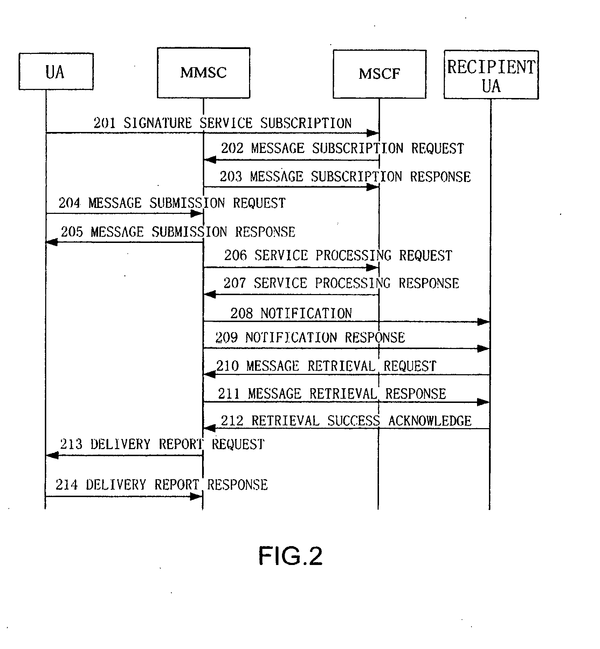

Referring to Fig. 2, a method for implementing signature service provided by the embodiment of the present invention is illustrated, the method including:
Step 201: A user agent submits a signature service subscription request to an MSCF;

The service subscription information may include a user ID, a service type ID and a signature.

Step 202: The MSCF stores the service subscription information, and sends a message subscription request (e.g. MM10_Subscribe.REQ) carrying message subscription information to the MMSC;

The service trigger point in the message subscription information may be Point TAP1 or Point TAP2, and the message subscription information includes: message body" indicator (e.g. field "Need Body") and wait response indicator (e.g. field "Wait for Response"), for indicating to the MMSC that the MMSC shall carry a message body of the message submission request (e.g. MM1_Submit.REQ) in a service processing request when sending the service processing request, and then waits for a response from the MSCF.

In practical implementation, the field "Subscriber" in the message subscription request (e.g. MM10_Subscribe.REQ) is used to carry a user ID, the field "Trigger Point" is used to carry a service trigger point, and the fields "Need Body" and "Wait for Response" are used to indicate to the MMSC that the MMSC shall carry a message body when sending the service processing request, and then wait for the response from the MSCF.

Step 203: The MMSC stores the message subscription information carried in the message subscription request (e.g. MM10_Subscribe.REQ), and returns a message subscription response (e.g. MM10_Subscribe.RES) to the MSCF.

The process of implementing the subscription of the signature service by the user is described above, and the process of implementing the signature service that the user subscribes to is described as follows, including:
Step 204: A sender UA submits a message submission request (e.g. MM1_Submit.REQ) to the MMSC;

The message submission request (e.g. MM1_Submit.REQ) carries a sender ID, recipient ID and message body.

Step 205: From stored message subscription information, the MMSC searches out, according to the sender ID carried in the message submission request (MMI_Submit.REQ), that the service trigger point that the MSCF subscribes to for the user is TPA2; and the MMSC returns a message submission response (e.g. MM1_Submit.RES) to the sender UA.

Step 206: The MMSC reaches TPA2, then sends a service processing request (e.g. MM10_Interrogation.REQ) to the MSCF, and waits a response from the MSCF.

The service processing request (e.g. MM10_Interrogation.REQ) may include fields "Sender address", "Content Type" and "Content", and the field "Content" is used to carry a message body.

Step 207: From the stored service subscription information, after receiving the service processing request (e.g. MM10_Interrogation.REQ), the MSCF searches out, according to the sender ID, that the user subscribes to the signature service; then the MSCF parses the fields "Content Type" and "Content", adds a signature preset by the sender to the message body, and returns a service processing response (e.g. MM10_Interrogation.RES) to the MMSC.

In practical implementation, the MSCF places the message body added with the signature in the content field of the service processing response (e.g. MM10_Interrogation.RES) and returns it to the MMSC, and indicates to the MMSC, via the field "Process Status" of the service processing response (e.g. MM10_Interrogation.RES), that the MMSC shall modify the message.

With respect to the MSCF, the signature service is implemented after the above steps are performed, but in order to send the message added with signature to the recipient user, the above method may further include the following steps:
Step 208: The MMSC stores the message body added with signature according to the instruction of the field "Process Status", and sends a notification message (e.g. MM1_Notification.REQ) to the recipient UA.
Step 209: The recipient UA returns a notification response (e.g. MM1_Notification.RES).
Step 210: The recipient user agent sends a message retrieval request (e.g. MM1_Retrieve.REQ).
Step 211: The MMSC returns a message retrieval response (e.g. MM1_Retrieve.RES) to the recipient UA, and sends the message body added with signature to the recipient UA through the message retrieval response (e.g. MM1_Retrieve.RES).
Step 212: The Recipient UA sends a retrieval success acknowledge message (e.g. MM1_Acknowledge.REQ) to the MMSC.

Further, if the sender requires the MMSC to return a delivery report, the method further includes, after the MMSC receives the retrieval success acknowledge message (e.g. MM1_Acknowledge.REQ):
Step 213: The MMSC returns a delivery report request (e.g. MM1_DeliveryReport.REQ) to the sender UA.
Step 214: The sender UA returns a delivery report response (e.g. MM1_DeliveryReport.RES) to the MMSC.

Described above is an implementation process of the signature service provided by the embodiment of the present invention, when the service trigger point is TPA2. A second implementation process when the service trigger point is TPA2 is that the MMSC can first return a message submission response (e.g. MM1_Submit.RES) to the sender UA in step 205, and then search for the service trigger point that the MSCF subscribes to for the user, which does not influence the implementation of the present invention. If the service trigger point is TPA1, the implementation process is substantially same as that of TPA2, and the difference is only that the MMSC sends the service processing request to the MSCF before returning the message submission response (e.g. MM1_Submit.RES) to the sender UA.

### II. Calling Receipt Service

The calling receipt service means that with respect to each message submitted by the sender that subscribes to the calling receipt service, the system notifies, via a short message, the sender the status of message sending.

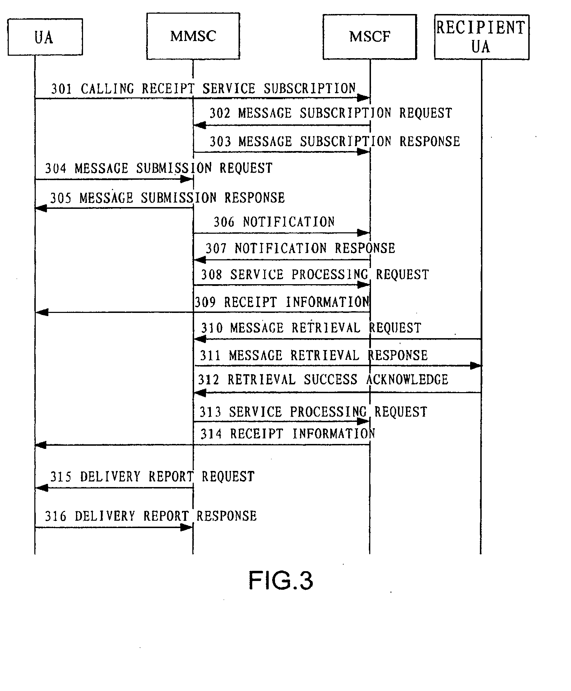

Referring to Fig. 3, illustrated is a method for implementing a calling receipt service provided by an example useful for understanding the present invention, including:
Step 301: The user submits, to the MSCF, a calling receipt service subscription request carrying service subscription information;

The service subscription information may include a user ID and a service type ID.

Step 302: The MSCF stores the service subscription information, and sends a message subscription request (e.g. MM10_Subscribe.REQ) carrying message subscription information to the MMSC;

The service trigger point in the message subscription information may be service trigger point TPA3 and TPA4, or any one thereof; meanwhile, the message body needs not to be carried when the service processing request is sent, and the response from the MSCF needs not to be waited for.

In practical implementation, the field "Subscribe" of message subscription request (e.g. MM10_Subscribe.REQ) is used to carry the user ID, and the field "Trigger Point" is used to carry the service trigger point.

Step 303: The MMSC stores the message subscription information, and returns a message subscription response (e.g. MM10_Subscribe.RES) to the MSCF.

The process of implementing the subscription of the calling receipt service by the user is described above, and the process of implementing the calling receipt service that the user subscribes to is described as follows, including:
Step 304: The sender UA submits, to the MMSC, a message submission request (e.g. MM1_Submit.REQ).
Step 305: From stored message subscription information, the MMSC searches out, according to the sender ID, that the trigger points that the MSCF subscribes to for the user are TPA3 and TPA4, and returns a message submission response (e.g. MM1_Submit.RES) to the sender UA.
Step 306: The MMSC sends a notification message (e.g. MM1_Notification.REQ) to the recipient UA.
Step 307: The recipient UA returns a notification response (e.g. MM1_Notification.RES) to the MMSC.
Step 308: The MMSC reaches TPA3, and sends a service processing request (e.g. MM10_Interrogation.REQ) to the MSCF.

In practical implementation, the field Sender address in the service processing request (e.g. MM10_Interrogation.REQ) carries the sender ID.

Step 309: From the stored service subscription information, the MSCF searches out, according to the sender ID, that the user subscribes to the calling receipt service, and sends a receipt message to the sender UA to prompt the sender that the push notification has been sent.

Step 310: The recipient UA sends a message retrieval request (e.g. MM1_Retrieve.REQ);

Step 311: The MMSC returns a message retrieval response (e.g. MM1_Retrieve.RES);

The message content field of the message retrieval response (e.g. MM1_Retrieve.RES) includes a message body, and if the sender user also subscribes to signature service, the message retrieval response (e.g. MM1_Retrieve.RES) carries the message body added with a signature.

Step 312: The recipient UA sends a retrieval success acknowledge message (e.g. MM1_Acknowledge.REQ) to the MMSC.

Step 313: The MMSC reaches TPA4, and sends a service processing request (e.g. MM10_Interrogation.REQ) to the MSCF.

In practical implementation, the service processing request (e.g. MM10_Interrogation.REQ) may carry fields "Sender address" and "Send Status".

Step 314: The MSCF retrieves the sender ID from the field "Sender address" after receiving the service processing request (e.g. MM10_Interrogation.REQ), retrieves message delivery state according to the field Send Status, and sends a receipt message to the sender UA to notify the user of a final result of message delivery.

Further, if the sender user requires the MMSC to return a delivery report, after the MMSC sends the service processing request (e.g. MM10_Interrogation.REQ) to the MSCF, the method further includes:
Step 315: The MMSC returns a delivery report request (e.g. MM1_DeliveryReport.REQ) to the sender UA.
Step 316: The sender UA returns a delivery report response (e.g. MM1_DeliveryReport.RES) to the MMSC.

What has been described above is one way for implementing calling receipt service provided by the example and in other example step 305 may be executed either after step 306, or between steps 307 and 308.

### III. Sponsor Service

The sponsor service means that some users voluntarily adds advertising information into the received message, so as to earn share of the operator's advertisement income.

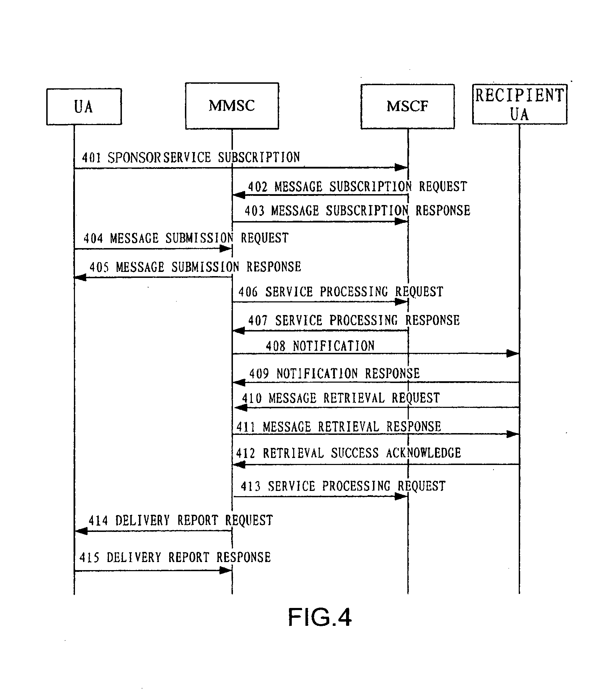

Referring to Fig. 4, illustrated is a method for implementing a sponsor service provided by the embodiment of the present invention, including:
Step 401: The user submits a sponsor service subscription request carrying service subscription information to the MSCF;

The service subscription information include a user ID and a service type ID.

Step 402: The MSCF stores the service subscription information, and sends a message subscription request (e.g. MM10_Subscribe.REQ) carrying message subscription information to the MMSC;

The service trigger points of the message subscription information are TPB 1 and TPB3; if TPB1 is subscribed to, the message subscription information shall include a message body indicator and a wait response indicator, for indicating to the MMSC that the MMSC shall carry the message body when sending the service processing request, and then wait for a response from the MSCF; if according to an example TPB3 is subscribed to, the MMSC needs not to carry the message body when sending the service processing request, and needs not to wait for a response from the MSCF.

Step 403: The MMSC stores the message subscription information in the message subscription request (e.g. MM10_Subscribe.REQ), and returns a message subscription response (e.g. MM10_Subscribe.RES) to the MSCF.

The process of implementing the subscription of sponsor service by the user is described above, and the process of implementing the sponsor service that the user subscribes to is described as follows, including:
Step 404: The sender UA submits a message submission request (e.g. MM1_Submit.REQ) to the MMSC.

The message submission request (e.g. MM1_Submit.REQ) includes: a sender ID, a recipient ID and a message body.

Step 405: From stored message subscription information, the MMSC searches out, according to the sender ID, that the trigger points that the MSCF subscribes to for the user are TPB1 and TPB3, and returns a message submission response (e.g. MM1_Submit.RES) to the sender UA.

Step 406: The MMSC reaches TPB1, sends a service processing request (e.g. MM10_Interrogation.REQ) to the MSCF, and waits for a response from the MSCF.

In practical implementation, fields Content Type and Content may be included in the service processing request (e.g. MM10_Interrogation.REQ).

Step 407: After receiving the service processing request (e.g. MM10_Interrogation.REQ), the MSCF searches out, from stored service subscription information and according to the recipient ID, that the recipient user has subscribed to the sponsor service, analyzes fields such as Content Type and Content in the message, adds advertising information to the message body carried in the field Content, returns the message body added with the advertising information to the MMSC through the service processing response (e.g. MM10_Interrogation.RES), and points out in the field Process Status that the MMSC shall modify the message.

Step 408: The MMSC stores the message body added with the advertising information according to the requirement of the MSCF, and sends a notification message (e.g. MM1_Notification.REQ) to the recipient user.

Step 409: The recipient user agent returns a notification response (e.g. MM1_Notification.RES).

Step 410: The recipient UA sends a message retrieval request (e.g. MM1_Retrieve.REQ).

Step 411: The MMSC returns a message retrieval response (e.g. MM1_Retrieve.RES), where the message content of the message retrieval response (e.g. MM1_Retrieve.RES) carries the message body added with the advertising information.

Step 412: The recipient UA sends a retrieval success acknowledge (e.g. MM1_Acknowledge.REQ) to the MMSC.

Step 413: The MMSC reaches TPB4, and sends a service processing request (e.g. MM10_Interrogation.REQ) to the MSCF, where the service processing request (e.g. MM10_Interrogation.REQ) includes a field Send Status to indicate a result of message delivery; after receiving the service processing request (e.g. MM10_Interrogation.REQ), the MSCF determines, according to the delivery state displayed in the field Send Status, whether to provide an advertising compensation to the user.

Further, if the sender user requires the MMSC to return a delivery report, after the MMSC sends the service processing request (e.g. MM10_Interrogation.REQ) to the MSCF, the method further includes:
Step 414: The MMSC sends to a delivery report request (e.g. MM1_DeliveryReport.REQ) the sender UA.
Step 415: The sender UA returns a delivery report response (e.g. MM 1 _DeliveryReport.RES) to the MMSC.

The methods provided by the embodiments of the present invention and an example are described above, and a person skilled in the art can use the methods provided by the embodiments of the present invention to implement the above three MMS simultaneously in one MSCF, or three MSCF respectively, which does not influence the implementation of the embodiments of the present invention.

A person skilled in the art will appreciate that all or partial steps in the above methods can be implemented by instructing related hardware with a program that may be stored in a computer readable storage medium, and when the program is executed, the following steps are included:
A method for implementing MMS, including: receiving, by an MMSC, a message submission request; searching for, by the MMSC, from stored message subscription information and according to a user ID carried in the message submission request, a service trigger point that an MSCF subscribes to for a user; and sending, by the MMSC, a service processing request to the MSCF when the service trigger point is reached; the MSCF searches for, from stored message subscription information and according to the user ID carried in the message processing request, a service that the user subscribes to, and performs corresponding service processing.

The above mentioned storage medium may be a ROM, magnetic disc or optical disk, etc.

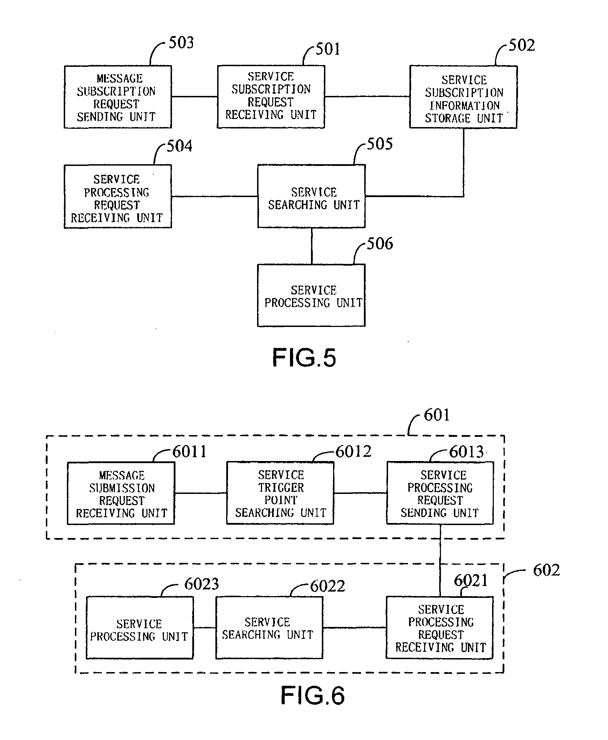

The embodiment of the present invention further provides an MSCF, as shown in Fig. 5, including:
a service subscription request receiving unit 501, configured to receive a service subscription request carrying service subscription information;
a service subscription information storage unit 502, configured to store the service subscription information which may include a user ID and a service type ID; and
a message subscription request sending unit 503, configured to send a message subscription request that carries message subscription information, which includes a user ID and a service trigger point, to an MMSC when the service subscription request receiving unit receives the service subscription request.

In order to complete the service processing initiated by the user, the MSCF further includes:
a service processing request receiving unit 504, configured to receive a service processing request;
a service searching unit 505, configured to search for, from the service subscription information storage unit 502 and according to a user ID carried in the service processing request, a service that a user subscribes to; and
a service processing unit 506, configured to perform corresponding service processing according to the service searched out by the service searching unit 505.

The MSCF provided by the embodiment of the present invention implements a message subscription to the MMSC, so that the MMSC only sends the message subscribed to by the MSCF to the MSCF for corresponding service processing, which avoids too strong pressure on the MSCF due to the MMSC triggering each message sent by the user to the MSCF.

The embodiments of the present invention further provide a system for implementing MMS, as shown in Fig. 6, including: an MMSC 601 and an MSCF 602;

The MMSC 601 includes:
a message submission request receiving unit 6011, configured to receive a message submission request submitted by a UA;
a service trigger point searching unit 6012, configured to search for, from stored message subscription information and according to a user ID carried in the message submission request, a service trigger point that an MSCF subscribes to for a user; and
a service processing request sending unit 6013, configured to send a service processing request to the MSCF when the service trigger point is reached.

The MSCF 602 includes:
a service processing request receiving unit 6021, configured to receive a service processing request sent by the service processing request sending unit;
a service searching unit 6022, configured to search for, from stored service subscription information and according to a user ID carried in the service processing request, a service that a user subscribes to; and
a service processing unit 6023, configured to perform corresponding service processing according to the service searched out by the service searching unit.

The MSCF further includes:
a service subscription request receiving unit, configured to receive a service subscription request carrying service subscription information;
a service subscription information storage unit, configured to store the service subscription information which includes a user ID and a service type ID; and
a message subscription request sending unit, configured to send a message subscription request that carries message subscription information to an MMSC when the service subscription request receiving unit receives the service subscription request, where the message subscription information may include a user ID and a service trigger point.

The MMSC further includes:
a message subscription request receiving unit, configured to receive a message subscription request sent by the message subscription request sending unit; and
a message subscription information storage unit, configured to store message subscription information carried in the message subscription request.
The system provided by the embodiment of the present invention and an example is described as follows with respect to the three different MMSs.

### I. Signature Service

If the service subscription request submitted by the user is a signature service subscription request, the service subscription information stored by the service subscription information storage unit further includes a signature;
the message subscription information sent by the message subscription request sending unit further includes a message body indicator and a wait response indicator;
the service trigger point sent by the message subscription request sending unit is TPA1 or TPA2.

In addition, the service processing request sent by the service processing request sending unit 6013 further carries the message body and the sender ID in the message submission request;
the service processing unit 6023 is a signature service processing unit, configured to, when TPA1 or TPA2 is reached, search for, according to the sender ID and from stored service subscription information, for a signature preset by the sender, add the signature to the message body, and return the message body added with the signature to the MMSC through a service processing response.

### II. Calling Receipt Service

If the service subscription request submitted by the user is a calling receipt service subscription request, the service trigger point sent by the message subscription request sending unit is TPA3 and/or TPA4;
the service processing request sent by the service processing request sending unit 6013 carries a sender ID when the reached service trigger point is TPA3;
the service processing unit 6023 includes a first calling receipt service processing unit, configured to send a receipt message to the sender UA to prompt the sender user that the system has sent a notification message to the recipient user.

The service processing request sent by the service processing request sending unit 6013 carries a sender ID and a message delivery state when the reached service trigger point is TPA4;
the service processing unit 6023 further includes a second calling receipt service processing unit, configured to send a receipt message to the sender UA to notify the user of a final result of the message delivery, according to a message delivery state.

### III. Sponsor Service

If the service subscription request submitted by the UA is a sponsor service subscription request, the service trigger point sent by the message subscription request sending unit is TPB1 and TPB3;
the message subscription information sent by the message subscription request sending unit further includes a message body indicator and a wait response indicator, when the reached service trigger point is TPB1; and
the service processing request sent by the service processing request sending unit 6013 carries a recipient ID, when the reached service trigger point is TPB 1.

The service processing unit 6023 includes a sponsor service processing unit, configured to search for, according to the recipient ID and from stored service subscription information, advertising information that the recipient subscribes to in advance, adding the advertising information to the message body, and returning the message body added with advertising information to the MMSC through a service processing response message.

The service processing request sent by the service processing request sending unit 6013 carries a recipient ID and a message delivery state, when the reached service trigger point is TPB3.

The service processing unit 6023 further includes an accounting compensation unit, configured to determine, according to the message delivery state, whether to provide an advertising compensation to the user.

The method, system and related device for implementing MMS provided by the present invention are described above.

## Claims

1. A method for implementing multimedia messaging service ,MMS, comprising:
receiving (102, 202, 402), by a Multimedia Messaging Service Center, MMSC, a message subscription request carrying message subscription information from a Messaging Service Control Function, MSCF, wherein the message subscription information comprises a user identifier, ID, a service trigger point, a message body indicator and a wait response indicator; wherein, the message body indicator and the wait response indicator indicate to the MMSC that the MMSC shall carry a message body when initiating a service processing request and shall then wait for a response from the MSCF;
storing (103, 203, 403), by the MMSC, the message subscription information comprising the user ID, the service trigger point, the message body indicator and the wait response indicator, carried in the message subscription request;
receiving (104, 204, 404), by the MMSC, a message submission request;
searching for (105, 205, 405), by the MMSC, from stored message subscription information in the MMSC and according to a user ID carried in the message submission request, a service trigger point that the MSCF subscribes to for a user; and
sending (106, 206, 406), by the MMSC, the service processing request to the MSCF when the service trigger point is reached, and wherein the service processing request comprises the user ID and the message body, so that the MSCF searches for, from the stored message subscription information in the MSCF and according. to the user ID carried in the message processing request, a service that the user subscribes to, and performs corresponding service processing; wherein, the service that the user subscribes to is a signature service or a sponsor service;
receiving (107, 207, 407), by the MMSC, a modified message body returned by the MSCF, and sending (108, 208, 408) the modified message body to a recipient.

2. The method according to claim 1, wherein
if the service that the user subscribes to is the signature service, the modified message body is a message body added with signature; and
if the service that the user subscribes to is the sponsor service, the modified message body is a message body added with advertising information.

3. A method for implementing multimedia messaging service ,MMS, comprising:
receiving (101, 201, 401), by a Messaging Service Control Function, MSCF, a service subscription request submitted by a user agent ,UA; wherein the service subscription request submitted by the UA is a signature service subscription request or a sponsor service subscription request and carries service subscription information;
storing (102, 202, 402), by the MSCF, the service subscription information comprising a user ID and a service type ID carried in the service subscription request;
sending (102, 202, 402), by the MSCF, a message subscription request carrying message subscription information to a Multimedia Messaging Service Center, MMSC, wherein the message subscription information comprises the user, ID, a service trigger point, a message body indicator and a wait response indicator; wherein the service trigger point and the user ID enable the MMSC to send a service processing request at the service trigger point after receiving a message submission request with the user ID, and wherein the message body indicator and the wait response indicator indicate to the MMSC that the MMSC shall carry a message body of the message submission request when initiating a service processing request and shall then wait for a response from the MSCF; receiving (106, 206, 406), by the MSCF, the service processing request comprising the user ID, and a message body initiated by the MMSC; and
searching for (107, 207, 407), by the MSCF, a service that the user subscribes to from stored service subscription information in the MSCF according to the user ID, and performing (107, 207, 407)corresponding service processing by retrieving, by the MSCF, a message body from the service processing request, adding advertising information or a signature preset by the user to the message body, and returning the message body added with the advertising information or the signature to the MMSC through a service processing response
wherein, the service that the user subscribes to is a signature service or a sponsor service.

4. A Messaging Service Control Function, MSCF, comprising:
a service subscription request receiving unit (501), configured to receive a service subscription request carrying service subscription information, wherein the service subscription request submitted by a user agent, UA, is a signature service subscription request or a sponsor service subscription request and carries service subscription information;
a service subscription information storage unit (502), configured to store the service subscription information comprising at least a user ID and a service type ID;
a message subscription request sending unit (503), configured to send a message subscription request carrying message subscription information to a Multimedia Messaging Service Center, MMSC, wherein the message subscription information comprises the user ID, a service trigger point, a message body indicator and a wait response indicator; wherein the service trigger point and the user ID enable the MMSC to send a service processing request at the service trigger point after receiving a message submission request with the user ID, and wherein the message body indicator and the wait response indicator indicate to the MMSC that the MMSC shall carry a message body of the message submission request when initiating a service processing request and shall then wait for a response from the MSCF;
a service processing request receiving unit (504), configured to receive the service processing request;
a service searching unit (505), configured to search for, from a service subscription information storage unit and according to the user ID carried in the service processing request, a service that the user subscribes to; and
a service processing unit (506), configured to perform corresponding service processing according to the service searched out by the service searching unit by retrieving, a message body from the service processing request, adding advertising information or a signature preset by the user to the message body, and returning the message body added with the advertising information or the signature to the MMSC through a service processing response
wherein the service that the user subscribes to is a signature service or a sponsor service.

5. A Multimedia Messaging Service Center, MMSC, comprising
a message subscription request receiving unit, configured to receive a message subscription request carrying message subscription information from a Messaging Service Control Function, MSCF, wherein the message subscription information comprises a user identifier, ID, a service trigger point, a message body indicator and a wait response indicator; wherein, the message body indicator and the wait response indicator indicate to the MMSC that the MMSC shall carry a message body when initiating a service processing request and shall then wait for a response from the MSCF;
a message subscription information storage unit, configured to store the message subscription information comprising the user ID, the service trigger point, the message body indicator and the wait response indicator carried in the message subscription request;
a message submission request receiving unit (6011) configured to receive a message submission request submitted by a user agent, UA;
a service trigger point searching unit (6012), configured to search for, from stored message subscription information in the MMSC and according to a user ID carried in the message submission request, a service trigger point that the MSCF subscribes to for a user wherein, the service that the user subscribes to is a signature service or a sponsor service; and
a service processing request sending unit (6013), configured to send the service processing request to the MSCF when the service trigger point is reached; and wherein the service processing request comprises the user ID and the message body, to enable the MSCF to search for, from the stored message subscription information in the MSCF and according to the user ID carried in the message processing request, a service that the user subscribes to, and to perform corresponding service processing; wherein, the service that the user subscribes to is a signature service or a sponsor service, and wherein the MMSC is adapted to receive a modified message body returned by the MSCF and to send the modified message body to a recipient.

6. A system for implementing multimedia messaging service, MMS, comprising a Multimedia Messaging Service Center, MMSC, according to claim 5 and a Messaging Service Control Function, MSCF, according to claim 4.

## Patentansprüche

1. Verfahren zum Implementieren eines Multimedia-Nachrichtendienstes (multimedia messaging service, MMS), das Folgendes umfasst:
Empfangen (102, 202, 402) durch ein Multimedia-Nachrichtendienstzentrum (Multimedia Messaging Service Center, MMSC), einer Nachrichtenabonnementanforderung, die Nachrichtenabonnementinformationen führt, von einer Nachrichtendienststeuerfunktion (Messaging Service Control Function, MSCF), wobei die Nachrichtenabonnementinformationen eine Anwenderkennung, Anwender-ID, einen Dienstauslösepunkt, ein Nachrichtenkörperkennzeichen und ein Antwortwartekennzeichen umfassen; wobei das Nachrichtenkörperkennzeichen und das Antwortwartekennzeichen dem MMSC angeben, dass das MMSC einen Nachrichtenkörper führen soll, wenn es eine Dienstverarbeitungsanforderung initiiert, und dann auf eine Antwort von der MSCF warten soll;
Speichern (103, 203, 403) der Nachrichtenabonnementinformationen, die die Anwender-ID, den Dienstauslösepunkt, das Nachrichtenkörperkennzeichen und das Antwortwartekennzeichen umfassen, die in der Nachrichtenabonnementanforderung geführt sind, durch das MMSC;
Empfangen (104, 204, 404) einer Nachrichtenzustellungsanforderung durch das MMSC;
Suchen (105, 205, 405) aus in dem MMSC gespeicherten Nachrichtenabonnementinformationen und gemäß einer Anwender-ID, die in der Nachrichtenzustellungsanforderung geführt ist, nach einem Dienstauslösepunkt, den die MSCF für einen Anwender abonniert, durch das MMSC; und
Senden (106, 206, 406) der Dienstverarbeitungsanforderung durch das MMSC zu der MSCF, wenn der Dienstauslösepunkt erreicht ist, und wobei die Dienstverarbeitungsanforderung die Anwender-ID und den Nachrichtenkörper umfasst, so dass die MSCF aus den in der MSCF gespeicherten Nachrichtenabonnementinformationen und gemäß der Anwender-ID, die in der Nachrichtenverarbeitungsanforderung geführt ist, nach einen Dienst, den der Anwender abonniert, sucht und entsprechende Dienstverarbeitung ausführt; wobei der Dienst, den der Anwender abonniert, ein Signaturdienst oder ein Sponsordienst ist;
Empfangen (107, 207, 407) eines modifizierten Nachrichtenkörpers, der durch die MSCF zurückgegeben wird, durch das MMSC und Senden (108, 208, 408) des modifizierten Nachrichtenkörpers zu einem Empfänger.

2. Verfahren nach Anspruch 1, wobei
falls der Dienst, den der Anwender abonniert, der Signaturdienst ist, der modifizierte Nachrichtenkörper ein Nachrichtenkörper ist, dem eine Signatur hinzugefügt ist; und falls der Dienst, den der Anwender abonniert, der Sponsordienst ist, der modifizierte Nachrichtenkörper ein Nachrichtenkörper ist, dem Werbeinformationen hinzugefügt sind.

3. Verfahren zum Implementieren eines Multimedia-Nachrichtendienstes, MMS, das Folgendes umfasst:
Empfangen (101, 201, 401) durch eine Nachrichtendienststeuerfunktion, MSCF, einer durch einen Anwenderagenten (user agent, UA) zugestellten Dienstabonnementanforderung; wobei die durch den UA zugestellte Dienstabonnementanforderung eine Signaturdienstabonnementanforderung oder eine Sponsordienstabonnementanforderung ist und Dienstabonnementinformationen führt;
Speichern (102, 202, 402) der Dienstabonnementinformationen, die eine Anwender-ID und eine Diensttyp-ID umfassen, die in der Dienstabonnementanforderung geführt sind, durch die MSCF;
Senden (102, 202, 402) einer Nachrichtenabonnementanforderung, die Nachrichtenabonnementinformationen führt, durch die MSCF zu einem Multimedia-Nachrichtendienstzentrum, MMSC, wobei die Nachrichtenabonnementinformationen die Anwender-ID, einen Dienstauslösepunkt, ein Nachrichtenkörperkennzeichen und
ein Antwortwartekennzeichen umfassen; wobei der Dienstauslösepunkt und die Anwender-ID ermöglichen, dass das MMSC eine Dienstverarbeitungsanforderung an dem Dienstauslösepunkt nach dem Empfangen einer Nachrichtenzustellungsanforderung mit der Anwender-ID senden kann, und wobei das Nachrichtenkörperkennzeichen und das Antwortwartekennzeichen dem MMSC angeben, dass das MMSC einen Nachrichtenkörper der Nachrichtenzustellungsanforderung führen soll, wenn es eine Dienstverarbeitungsanforderung einleitet, und dann auf eine Antwort von der MSCF warten soll; Empfangen (106, 206, 406) der durch das MMSC eingeleiteten Dienstverarbeitungsanforderung, die die Anwender-ID und einen Nachrichtenkörper umfasst, durch die MSCF; und
Suchen (107, 207, 407) durch die MSCF nach einem Dienst, den der Anwender abonniert, aus gespeicherten Dienstabonnementinformationen in der MSCF gemäß der Anwender-ID und Ausführen (107, 207, 407) entsprechender Dienstverarbeitung durch Abrufen eines Nachrichtenkörpers aus der Dienstverarbeitungsanforderung durch die MSCF, Hinzufügen von Werbeinformationen oder einer durch den Anwender voreingestellten Signatur zu dem Nachrichtenkörper und Zurückgeben des Nachrichtenkörpers, dem die Werbeinformationen oder die Signatur hinzugefügt sind, zu dem MMSC über eine Dienstverarbeitungsantwort,
wobei der von dem Anwender abonnierte Dienst ein Signaturdienst oder ein Sponsordienst ist.

4. Nachrichtendienststeuerfunktion, MSCF, die Folgendes umfasst:
eine Dienstabonnementanforderungsempfangseinheit (501), die konfiguriert ist, eine Dienstabonnementanforderung, die Dienstabonnementinformationen führt, zu empfangen, wobei die durch einen Anwenderagenten, UA, zugestellte Dienstabonnementanforderung eine Signaturdienstabonnementanforderung oder eine Sponsordienstabonnementanforderung ist und Dienstabonnementinformationen führt;
eine Dienstabonnementinformationsspeichereinheit (502), die konfiguriert ist, die Dienstabonnementinformationen, die wenigstens eine Anwender-ID und eine Diensttyp-ID umfassen, zu speichern;
eine Nachrichtenabonnementanforderungssendeeinheit (503), die konfiguriert ist,
eine Nachrichtenabonnementanforderung, die Nachrichtenabonnementinformationen führt, zu einem Multimedia-Nachrichtendienstzentrum, MMSC, zu senden, wobei die Nachrichtenabonnementinformationen die Anwender-ID, einen Dienstauslösepunkt, ein Nachrichtenkörperkennzeichen und ein Antwortwartekennzeichen umfassen;
wobei der Dienstauslösepunkt und die Anwender-ID ermöglichen, dass das MMSC eine Dienstverarbeitungsanforderung an dem Dienstauslösepunkt nach dem Empfangen einer Nachrichtenzustellungsanforderung mit der Anwender-ID senden kann, und wobei das Nachrichtenkörperkennzeichen und das Antwortwartekennzeichen dem MMSC angeben, dass das MMSC einen Nachrichtenkörper der Nachrichtenzustellungsanforderung führen soll, wenn es eine Dienstverarbeitungsanforderung einleitet, und dann auf eine Antwort von der MSCF warten soll;
eine Dienstverarbeitungsanforderungsempfangseinheit (504), die konfiguriert ist, die Dienstverarbeitungsanforderung zu empfangen;
eine Dienstsucheinheit (505), die konfiguriert ist, aus einer Dienstabonnementinformationsspeichereinheit und gemäß der Anwender-ID, die in der Dienstverarbeitungsanforderung geführt ist, einen Dienst zu suchen, den der Anwender abonniert; und
eine Dienstverarbeitungseinheit (506), die konfiguriert ist, entsprechende Dienstverarbeitung gemäß dem Dienst, der durch die Dienstsucheinheit herausgesucht wurde, durch Abfragen eines Nachrichtenkörpers aus der Dienstverarbeitungsanforderung, Hinzufügen von Werbeinformationen oder einer durch den Anwender voreingestellten Signatur zu dem Nachrichtenkörper und Zurückgeben des Nachrichtenkörpers, dem die Werbeinformationen oder die Signatur hinzugefügt wurden, zu dem MMSC über eine Dienstverarbeitungsantwort auszuführen
wobei der von dem Anwender abonnierte Dienst ein Signaturdienst oder ein Sponsordienst ist.

5. Multimedia-Nachrichtendienstzentrum, MMSC, das Folgendes umfasst:
eine Nachrichtenabonnementanforderungsempfangseinheit, die konfiguriert ist, eine Nachrichtenabonnementanforderung, die Nachrichtenabonnementinformationen führt, von einer Nachrichtendienststeuerfunktion, MSCF, zu empfangen, wobei die Nachrichtenabonnementinformationen eine Anwenderkennung, Anwender-ID, einen Dienstauslösepunkt, ein Nachrichtenkörperkennzeichen und ein Antwortwartekennzeichen umfassen; wobei das Nachrichtenkörperkennzeichen und
das Antwortwartekennzeichen dem MMSC angeben, dass das MMSC einen Nachrichtenkörper führen soll, wenn es eine Dienstverarbeitungsanforderung einleitet, und dann auf eine Antwort von der MSCF warten soll;
eine Nachrichtenabonnementinformationsspeichereinheit, die konfiguriert ist, die Nachrichtenabonnementinformationen, die die Anwender-ID, den Dienstauslösepunkt, das Nachrichtenkörperkennzeichen und das Antwortwartekennzeichen umfassen, die in der Nachrichtenabonnementanforderung geführt sind, zu speichern;
eine Nachrichtenzustellungsanforderungsempfangseinheit (6011), die konfiguriert ist, eine durch einen Anwenderagenten, UA, zugestellte Nachrichtenzustellungsanforderung zu empfangen;
eine Dienstauslösepunktsucheinheit (6012), die konfiguriert ist, aus in dem MMSC gespeicherten Nachrichtenabonnementinformationen und gemäß einer in der Nachrichtenzustellungsanforderung geführten Anwender-ID nach einem Dienstauslösepunkt, den die MSCF für einen Anwender abonniert, zu suchen, wobei der von dem Anwender abonnierte Dienst ein Signaturdienst oder ein Sponsordienst ist; und
eine Dienstverarbeitungsanforderungssendeeinheit (6013), die konfiguriert ist, die Dienstverarbeitungsanforderung zu der MSCF zu senden, wenn der Dienstauslösepunkt erreicht ist; und wobei die Dienstverarbeitungsanforderung die Anwender-ID und den Nachrichtenkörper umfasst, um zu ermöglichen, dass die MSCF aus den in der MSCF gespeicherten Nachrichtenabonnementinformationen und gemäß der in der Nachrichtenverarbeitungsanforderung geführten Anwender-ID nach einem von dem Anwender abonnierten Dienst suchen kann, und die entsprechende Dienstverarbeitung auszuführen; wobei der von dem Anwender abonnierte Dienst ein Signaturdienst oder ein Sponsordienst ist und wobei die MMSC ausgelegt ist, einen modifizierten Nachrichtenkörper, der durch die MSCF zurückgegeben wird, zu empfangen und den modifizierten Nachrichtenkörper zu einem Empfänger zu senden.

6. System zum Implementieren eines Multimedia-Nachrichtendienstes, MMS, das ein Multimedia-Nachrichtendienstzentrum, MMSC, nach Anspruch 5 und eine Nachrichtendienststeuerfunktion, MSCF, nach Anspruch 4 umfasst.

## Revendications

1. Procédé pour mettre en oeuvre un service de messagerie multimédia, MMS, comprenant les étapes suivantes :
recevoir (102, 202, 402), par un centre de service de messagerie multimédia, MMSC, une requête de souscription de message acheminant des informations de souscription de message à partir d'une fonction de contrôle de service de messagerie, MSCF, où les informations de souscription de message comprennent un identifiant d'utilisateur, ID, un point de déclenchement de service, un indicateur de corps de message et un indicateur d'attente de réponse ; où l'indicateur de corps de message et l'indicateur d'attente de réponse indiquent au MMSC que le MMSC devra acheminer un corps de message lors de l'initiation d'une requête de traitement de service et devra ensuite attendre une réponse de la MSCF ;
stocker (103, 203, 403), par le MMSC, les informations de souscription de message comprenant l'ID d'utilisateur, le point de déclenchement de service, l'indicateur de corps de message et l'indicateur d'attente de réponse, acheminés dans la requête de souscription de message ;
recevoir (104, 204, 404), par le MMSC, une requête de souscription de message ;
rechercher (105, 205, 405), par le MMSC, à partir des informations de souscription de message stockées dans le MMSC et conformément à un ID d'utilisateur acheminé dans la requête de soumission de message, un point de déclenchement de service auquel la MSCF s'abonne pour un utilisateur ; et
envoyer (106, 206, 406), par le MMSC, la requête de traitement de service à la MSCF lorsque le point de déclenchement de service est atteint, et où la requête de traitement de service comprend l'ID d'utilisateur et le corps de message, de manière à ce que la MSCF recherche, à partir des informations de souscription de message stockées dans la MSCF et conformément à l'ID d'utilisateur acheminé dans la requête de traitement de message, un service auquel l'utilisateur s'abonne, et effectue un traitement de service correspondant ; où le service auquel l'utilisateur s'abonne est un service de signature ou un service de parrainage ;
recevoir (107, 207, 407), par le MMSC, un corps de message modifié retourné par la MSCF, et envoyer (108, 208, 408) le corps de message modifié à un destinataire.

2. Procédé selon la revendication 1, dans lequel :
si le service auquel l'utilisateur s'abonne est le service de signature, le corps de message modifié est un corps de message auquel est ajouté une signature ; et
si le service auquel l'utilisateur s'abonne est le service de parrainage, le corps de message modifié est un corps de message auquel sont ajoutées des informations publicitaires.

3. Procédé pour mettre en oeuvre un service de messagerie multimédia, MMS, comprenant les étapes suivantes :
recevoir (101, 201, 401), par une fonction de contrôle de service de messagerie, MSCF, une requête de souscription de service soumise par un agent d'utilisateur,
UA ; où la requête de souscription de service soumise par l'UA est une requête de souscription de service de signature ou une requête de souscription de service de parrainage, et achemine des informations de souscription de service ;
stocker (102, 202, 402), par la MSCF, les informations de souscription de service comprenant un ID d'utilisateur et un ID de type de service acheminés dans la requête de souscription de service ;
envoyer (102, 202, 402), par la MSCF, une requête de souscription de message acheminant des informations de souscription de message à un centre de service de messagerie multimédia, MMSC, où les informations de souscription de message comprennent l'ID d'utilisateur, un point de déclenchement de service, un indicateur de corps de message et un indicateur d'attente de réponse ; où le point de déclenchement de service et l'ID d'utilisateur permettent au MMSC d'envoyer une requête de traitement de service au point de déclenchement de service après réception d'une requête de soumission de message avec l'ID d'utilisateur, et où l'indicateur de corps de message et l'indicateur d'attente de réponse indiquent au MMSC que le MMSC devra acheminer un corps de message de la requête de soumission de message lors de l'initiation d'une requête de traitement de service et devra ensuite
attendre une réponse de la MSCF ; recevoir (106, 206, 406), par la MSCF, la requête de traitement de service comprenant l'ID d'utilisateur, et un corps de message initié par le MMSC ; et
rechercher (107, 207, 407), par la MSCF, un service auquel l'utilisateur s'abonne à partir d'informations de souscription de service stockées dans la MSCF conformément à l'ID d'utilisateur, et effectuer (107, 207, 407) un traitement de service correspondant en récupérant, par la MSCF, un corps de message à partir de la requête de traitement de service, ajouter des informations publicitaires ou une signature prédéfinies par l'utilisateur au corps de message, et retourner le corps de message auquel sont ajoutées les informations publicitaires ou la signature au MMSC par l'intermédiaire d'une réponse de traitement de service,
où le service auquel l'utilisateur s'abonne est un service de signature ou un service de parrainage.

4. Fonction de contrôle de service de messagerie, MSCF, comprenant :
une unité de réception de requête de souscription de service (501), configurée pour recevoir une requête de souscription de service acheminant des informations de souscription de service, où la requête de souscription de service soumise par un agent d'utilisateur, UA, est une requête de souscription de service de signature ou une requête de souscription de service de parrainage et achemine des informations de souscription de service ;
une unité de stockage d'informations de souscription de service (502) configurée pour stocker les informations de souscription de service comprenant au moins un ID d'utilisateur et un ID de type de service ;
une unité d'envoi de requête de souscription de service (503), configurée pour envoyer une requête de souscription de message acheminant des informations de souscription de message à un centre de service de messagerie multimédia, MMSC, où les informations de souscription de message comprennent l'ID d'utilisateur, un point de déclenchement de service, un indicateur de corps de message et un indicateur d'attente de réponse ; où le point de déclenchement de service et l'ID d'utilisateur permettent au MMSC d'envoyer une requête de traitement de service au point de déclenchement de service après réception d'une requête de soumission de message avec l'ID d'utilisateur, et où l'indicateur de corps de message et l'indicateur d'attente de réponse indiquent au MMSC que le MMSC devra acheminer un corps de message de la requête de soumission de message lors de l'initiation d'une requête de traitement de service et devra ensuite attendre une réponse de la MSCF ;
une unité de réception de requête de traitement de service (504), configurée pour recevoir la requête de traitement de service ;
une unité de recherche de service (505), configurée pour rechercher, à partir d'une unité de stockage d'informations de souscription de service et conformément à l'ID d'utilisateur acheminé dans la requête de traitement de service, un service auquel l'utilisateur s'abonne ; et
une unité de traitement de service (506), configurée pour effectuer un traitement de service correspondant conformément au service recherché par l'unité de recherche de service en récupérant un corps de message à partir de la requête de traitement de service, en ajoutant des informations publicitaires ou une signature prédéfinies par l'utilisateur au corps de message, et en retournant le corps de message auquel sont ajoutées les informations publicitaires ou la signature au MMSC par l'intermédiaire d'une réponse de traitement de service,
où le service auquel l'utilisateur s'abonne est un service de signature ou un service de parrainage.

5. Centre de service de messagerie multimédia, MMSC, comprenant :
une unité de réception de requête de souscription de message, configurée pour recevoir une requête de souscription de message acheminant des informations de souscription de message à partir d'une fonction de contrôle de service de messagerie, MSCF, où les informations de souscription de message comprennent un identifiant d'utilisateur, ID, un point de déclenchement de service, un indicateur de corps de message et un indicateur d'attente de réponse ; où l'indicateur de corps de message et
l'indicateur d'attente de réponse indiquent au MMSC que le MMSC devra acheminer un corps de message lors de l'initiation d'une requête de traitement de service et
devra ensuite attendre une réponse de la MSCF ;
une unité de stockage d'informations de souscription de message, configurée pour stocker les informations de souscription de message comprenant l'ID d'utilisateur, le point de déclenchement de service, l'indicateur de corps de message et l'indicateur d'attente de réponse, acheminés dans la requête de souscription de message ;
une unité de réception de requête de souscription de message (6011), configurée pour recevoir une requête de soumission de message soumise par un agent d'utilisateur,
UA;
une unité de recherche de point de déclenchement de service (6012), configurée pour rechercher, à partir d'informations de souscription de message stockées dans le MMSC et conformément à un ID d'utilisateur acheminé dans la requête de soumission de message, un point de déclenchement de service auquel la MSCF s'abonne pour un utilisateur, où le service auquel l'utilisateur s'abonne est un service de signature ou un service de parrainage ; et
une unité d'envoi de traitement de service (6013), configurée pour envoyer la requête de traitement de service à la MSCF lorsque le point de déclenchement de service est atteint ; et où la requête de traitement de service comprend l'ID d'utilisateur et le corps de message, pour permettre à la MSCF de rechercher, à partir des informations de souscription stockées dans la MSCF et conformément à l'ID d'utilisateur acheminé dans la requête de traitement de message, un service auquel l'utilisateur s'abonne, et pour effectuer un traitement de service correspondant ; où le service auquel l'utilisateur s'abonne est un service de signature ou un service de parrainage,
et où le MMSC est conçu pour recevoir un corps de message modifié retourné par la MSCF, et pour envoyer le corps de message modifié à un destinataire.

6. Système pour mettre en oeuvre un service de messagerie multimédia, MMS, comprenant un centre de service de messagerie multimédia, MMSC, selon la revendication 5, et une fonction de contrôle de service de messagerie, MSCF, selon la revendication 4.
